(19) Europäisches Patentamt / European Patent Office / Office européen des brevets

(11) **EP 4 312 119 B1**

(12) **EUROPEAN PATENT SPECIFICATION**

(45) Date of publication and mention
of the grant of the patent:
**25.02.2026 Bulletin 2026/09**

(21) Application number: **23185844.0**

(22) Date of filing: **17.07.2023**

(51) International Patent Classification (IPC):
*G06F 7/544* *(2006.01)*

(52) Cooperative Patent Classification (CPC):
**G06F 7/5443; G06F 7/483;** G06F 2207/3824

(54) **CONVOLUTION HARDWARE ACCELERATOR**

KONVOLUTIONSHARDWAREBESCHLEUNIGER

ACCÉLÉRATEUR MATÉRIEL À CONVOLUTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.07.2022 US 202217876378**

(43) Date of publication of application:
**31.01.2024 Bulletin 2024/05**

(73) Proprietor: **Avago Technologies International
Sales
Pte. Limited
Singapore 768923 (SG)**

(72) Inventors:
• **He, Xiaocheng
San Jose, 95120 (US)**
• **Schoner, Brian
Fremont, 94536 (US)**

(74) Representative: **Bosch Jehle
Patentanwaltsgesellschaft mbH
Flüggenstraße 13
80639 München (DE)**

(56) References cited:
**EP-A1- 3 674 982      EP-A1- 3 857 353
US-A1- 2021 073 171**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present description relates generally to hardware acceleration including, for example, hardware acceleration for machine learning operations.

Computing tasks or operations may be performed using general-purpose processors executing software designed for the computing tasks or operations. Alternatively, computing hardware may be designed to perform the same computing tasks or operations more effectively than the general-purpose processors executing software. Machine learning operations performed in layers of a machine learning model are good candidates for hardware acceleration using computing hardware specifically designed to perform the operations.

According to an aspect, a device is provided, comprising:

a plurality of integer multiplier circuits;
a multiplexer circuit configured to provide portions of mantissas of a plurality of feature elements and portions of mantissas of a plurality of weight elements to respective integer multiplier circuits of the plurality of integer multiplier circuits, wherein the feature elements and the weight elements are floating-point data types, and wherein each integer multiplier circuit is configured to multiply a respective portion of the mantissa of a feature element by a respective portion of the mantissa of a weight element to generate a partial product;
a first shift circuit configured to shift bits of the partial products based on exponents of the plurality of feature elements and of the plurality of the weight elements;
a first integer adder circuit configured to add the shifted partial products to generate a sum; and
a composition circuit configured to generate an output element based on the sum generated by the first integer adder circuit, the exponents of the plurality of feature elements, and the exponents of the plurality of weight elements.

Advantageously, the plurality of feature elements are paired with the plurality of weight elements, respectively, to form a plurality of feature-weight pairs,

wherein the device further comprises an exponent circuit configured to:

add the exponents of the feature element and the weight element for each feature-weight pair to generate a respective exponent sum;
determine a maximum exponent sum from the respective exponent sums; and
for each feature-weight pair, determine a difference between the maximum component sum and the respective exponent sum,

wherein the first shift circuit is configured to shift the bits of the partial products based on the respective differences between the maximum component sum and the respective exponent sums, and
wherein the output element is generated based on the maximum exponent sum.

Advantageously, the device further comprises:

a sign circuit configured to determine an output sign for each feature-weight pair based on sign bits of the respective feature elements and weight elements; and
a conversion circuit configured to generate two's complements of the shifted partial products based on the respective output signs prior to being added by the first integer adder circuit.

Advantageously, the composition circuit is further configured to:

convert the sum generated by the first integer adder circuit from two's complement to signed-magnitude format; and
round the converted sum to a predetermined bit length,
wherein a sign bit of the output element is based on the converted sum, an exponent of the output element is based on the determined maximum exponent sum, and a mantissa of the output element is based on the rounded sum.

Advantageously, a bit size of the mantissas of the plurality of feature elements and the plurality of weight elements is greater than a bit size of the plurality of integer multiplier circuits. Advantageously, the multiplexer circuit is further configured to, for each feature-weight pair:

provide different portions of the mantissa of the feature element to different respective integer multiplier circuits; and
provide one portion of the mantissa of the corresponding weight element to each of the different respective integer multiplier circuits,
wherein a different portion of the mantissa of the corresponding weight element is provided to each of the different respective integer multiplier circuits during different cycles of the device.

Advantageously, the device further comprises:

a second shift circuit configured to shift bits of the partial products generated by the different respective integer multiplier circuits based on a bit position of the portion of the mantissa of the feature element multiplied to generate the respective partial products; and
a second integer adder circuit configured to add the shifted partial products corresponding to each of the feature elements to generate respective partial sums,
wherein the first shift circuit is configured to shift the bits of the partial sums based on the determined difference between the maximum component sum and the respective exponent sum of the corresponding feature-weight pair,
wherein the conversion circuit is configured to generate two's complements of the shifted partial sums, and
wherein the first integer adder circuit is configured to add the shifted partial sums to generate the sum.

Advantageously, the device further comprises:

a third shift circuit configured to shift bits of the sum generated by the first integer adder circuit based on a cycle count of the device,
wherein the composition circuit generates the output element based on the shifted sum. Advantageously, the composition circuit is configured to provide the output element to an accumulator circuit.

**BRIEF DESCRIPTION OF THE DRAWINGS**

Certain features of the subject technology are set forth in the appended claims. However, for purposes of explanation, several aspects of the subject technology are depicted in the following figures.

FIG. 1 is a block diagram depicting components of a convolution hardware accelerator device/system according to aspects of the subject technology.

FIG. 2 is a block diagram depicting components of a MAC cell according to aspects of the subject technology.

FIG. 3 is a block diagram depicting components of a MAC cell configured to multiply and accumulate input feature elements and weight elements having a floating-point data type according to aspects of the subject technology.

FIG. 4 contains a flowchart illustrating an example multiplication and accumulation operation of a MAC cell for a floating-point data type according to aspects of the subject technology.

FIG. 5 is a block diagram depicting multiplication operations performed by the integer multiplier circuits on the portions of the mantissas according to aspects of the subject technology.

FIG. 6 is a block diagram depicting multiplication operations performed by the integer multiplier circuits on the portions of the mantissas according to aspects of the subject technology.

FIG. 7 is a block diagram depicting components of a MAC cell configured to multiply and accumulate input feature elements and weight elements having a floating-point data type according to aspects of the subject technology.

FIG. 8 contains a flowchart illustrating an example multiplication and accumulation operation of a MAC cell for a floating-point data type according to aspects of the subject technology.

FIG. 9 is a block diagram depicting components of a MAC cell configured to multiply and accumulate input feature elements and weight elements having a quantized integer data type according to aspects of the subject technology.

FIG. 10 contains a flowchart illustrating an example multiplication and accumulation operation of a MAC cell for a quantized integer data type according to aspects of the subject technology.

**DETAILED DESCRIPTION**

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced using one or more implementations. In one or more instances, structures and components are shown in block-diagram form in order to avoid obscuring the concepts of the subject technology.

Deep learning neural networks typically include one or more convolution layers. Each convolution layer is configured to convolve an input tensor of input feature elements with a kernel of weight elements to generate an output tensor of output feature elements. The feature elements of the input tensor may be data values of an object, such as pixel values of an image or elements of a feature map generated by a previous layer in the neural network, provided as input to a convolution layer. The weight elements of the kernel may be data values used to filter the feature elements of the input tensor using a convolution operation to generate the output feature elements of the output tensor and may be modified during iterations of training the neural network. Input tensors, kernels, and output tensors may be single-dimensional or multidimensional arrays of data elements. The core computations of a convolution operation include the multiplication of different combinations of input feature elements and weight elements and the accumulation of the resulting products. Convolution hardware accelerators typically include a large number (e.g., 1,024) of multiplication and accumulation (MAC) cells configured to perform these core computations.

The MAC cells represent a significant portion of a convolution hardware accelerator. Accordingly, effective designs for the MAC cells are critical to producing cost-effective convolution hardware accelerators. For example, the selection and arrangement of multiplier circuits and associated circuitry in each MAC cell impacts the chip die size for the convolution hardware accelerator, which impacts manufacturing costs. To further complicate the designs, convolution hardware accelerators may be configured to support multiple integer and floating-point data types used in different machine-learning frameworks (e.g., INT8, INT16, float16, float32, bfloat16).

The subject technology provides an efficient MAC cell design that is configurable to process multiple integer and floating-point data types. According to aspects of the subject technology, MAC cells may be implemented using integer multiplier circuits and integer adder circuits instead of floating-point multiplier circuits and floating-point adder circuits, which can significantly reduce the chip die size. The MAC cells may be configured to perform floating-point operations using the integer multiplier circuits and integer adder circuits in combination with other circuits such as shift circuits. In addition, the MAC cells may be implemented using integer multiplier circuits all having one size (e.g., nine bits). Other features and aspects of the subject technology are described below.

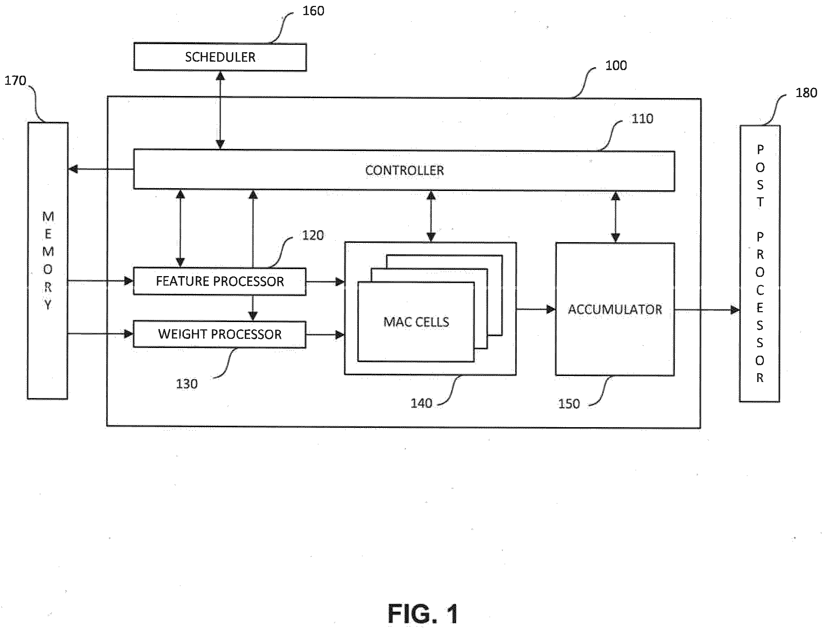

FIG. 1 is a block diagram depicting components of a convolution hardware accelerator device/system according to aspects of the subject technology. Not all of the depicted components may be required, however, and one or more implementations may include additional components not shown in the figure. Variations in the arrangement and type of the components may be made without departing from the scope of the claims as set forth herein. Depicted or described connections and couplings between components are not limited to direct connections or direct couplings and may be implemented with one or more intervening components unless expressly stated otherwise.

As depicted in FIG. 1, convolution hardware accelerator device/system 100 includes controller circuit 110, feature processor circuit 120, weight processor circuit 130, multiplication and accumulation (MAC) cells 140, and accumulator circuit 150. All the components of convolution hardware accelerator device/system 100 may be implemented in a single semiconductor device, such as a system on a chip (SoC). Alternatively, one or more of the components of convolution hardware accelerator device/system 100 may be implemented in a semiconductor device separate from the other components and mounted on a printed circuit board, for example, with the other components to form a system. In addition, one or more circuit elements may be shared between multiple circuit components depicted in FIG. 1. The subject technology is not limited to these two alternatives and may be implemented using other combinations of chips, devices, packaging, etc. to implement convolution hardware accelerator device/system 100.

Controller circuit 110 includes suitable logic, circuitry, and/or code to control operations of the components of convolution hardware accelerator device/system 100 to convolve an input tensor with a kernel to generate an output tensor. For example, controller circuit 110 may be configured to parse a command written to a command register (not shown) by scheduler 160 for a convolution operation. The command may include parameters for the convolution operation such as data types of the elements, a location of the input tensor in memory 170, a location of the kernel(s) in memory 170, a stride value for the convolution operation, etc. Using the parameters for the convolution operation, controller circuit 110 may configure and/or provide commands/instructions to feature processor circuit 120, weight processor circuit 130, MAC cells 140, and accumulator circuit 150 to perform a convolution operation for a particular data type and provide a resulting output tensor to post processor 180. The command register may be incorporated into controller circuit 110 or may be implemented as a separate component accessible to controller circuit 110 within convolution hardware accelerator device/system 100.

Scheduler 160 may be configured to interface with one or more other processing elements not shown in FIG. 1 to coordinate the operations of other layers in a convolutional neural network (CNN), such as pooling layers, rectified linear units (ReLU) layers, and/or fully connected layers, with operations of a convolutional layer implemented using convolution hardware accelerator device/system 100. The coordination may include timing of the operations, locations of input tensors either received from an external source or generated by another layer in the CNN, locations of output tensors either to use as an input tensor for another layer in the CNN or to be provided as an output of the CNN. Scheduler 160, or one or more portions thereof, may be implemented in software (e.g., instructions, subroutines, code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both software and hardware.

Memory 170 may include suitable logic, circuitry, and/or code that enable storage of various types of information such as received data, generated data, code, and/or configuration information. For example, memory 170 may be configured to store one or more input tensors, one or more kernels, and/or one or more output tensors involved in the operations of convolution hardware accelerator device/system 100. Memory 170 may include, for example, random access memory (RAM), read-only memory (ROM), flash memory, magnetic storage, optical storage, etc.

Post processor 180 may be configured to perform one or more post-processing operations on the output tensor provided by convolution hardware accelerator device/system 100. For example, post processor 180 may be configured to apply bias functions, pooling functions, resizing functions, activation functions, etc. to the output tensor. Post processor 180, or one or more portions thereof, may be implemented in software (e.g., instructions, subroutines, code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both software and hardware.

As noted above, controller circuit 110 may be configured to parse a command and, using parameters from the command, configure and/or provide commands/instructions to feature processor circuit 120, weight processor circuit 130, MAC cells 140, and accumulator circuit 150 to perform a convolution operation. For example, controller circuit 110 may set or provide configuration parameters to components of MAC cells 140 to configure the components for a particular integer or floating-point data type specified in the command to be used in the convolution operation. The components of MAC cells 140 and the configurations of the components used to support convolution operations of different integer and floating-point data types are described in more detail below. In addition, controller circuit 110 may be configured to generate requests for input feature elements from an input tensor stored in memory 170 and for weight elements from a kernel stored in memory 170. The requests may be provided to a direct memory access controller configured to read out the input feature elements from memory 170 and provide the input feature elements to feature processor circuit 120, and to read out the weight elements from memory 170 and provide the weight elements to weight processor circuit 130.

According to aspects of the subject technology, feature processor circuit 120 includes suitable logic, circuitry, and/or code to receive the input feature elements from memory 170 and distribute the input feature elements among MAC cells 140. Similarly, weight processor circuit 130 includes suitable logic, circuitry, and/or code to receive the weight elements from memory 170 and distribute the weight elements among MAC cells 140.

According to aspects of the subject technology, MAC cells 140 includes an array of individual MAC cells each including suitable logic, circuitry, and/or code to multiply input feature elements received from feature processor circuit 120 by respective weight elements received from weight processor circuit 130 and sum the products of the multiplication operations. The components of each MAC cell are described in further detail below. The subject technology is not limited to any particular number of MAC cells and may be implemented using hundreds or even thousands of MAC cells.

A convolution operation executed by convolution hardware accelerator device/system 100 may include a sequence of cycles or iterations, where each cycle or iteration involves multiplying different combinations of input feature elements from an input tensor with different combinations of weight elements from a kernel and summing the products (e.g., dot product or scalar product). The sum output from each MAC cell during each cycle or iteration is provided to accumulator circuit 150. According to aspects of the subject technology, accumulator circuit 150 includes suitable logic, circuitry, and/or code to accumulate the sums provided by MAC cells 140 during the sequence of cycles or iterations to generate output feature elements of an output tensor representing the dot products or scalar products from the convolution of the input tensor with the kernel. Accumulator circuit 150 may include a buffer configured to store the sums provided by MAC cells 140 and interim values of output feature elements while they are being generated from the sums provided by MAC cells 140, and adders configured to add the sums received from MAC cells 140 to the values of the corresponding output feature elements stored in the buffer. Once the sequence of cycles or iterations is complete, accumulator circuit 150 may be configured to provide the generated output tensor comprising final values of the output feature elements stored in the buffer to post processor 180 for further processing.

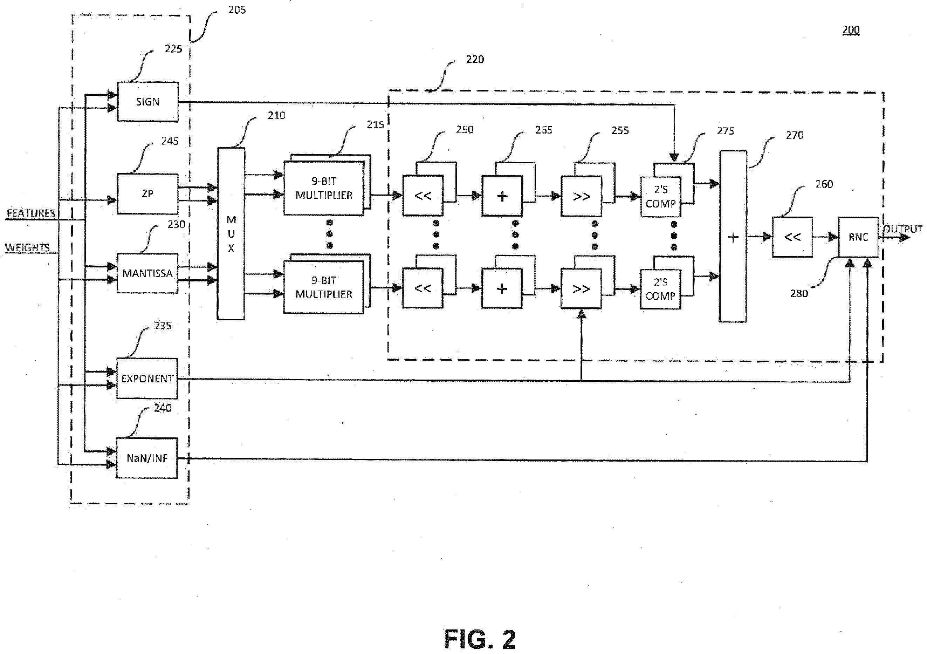

FIG. 2 is a block diagram depicting components of a MAC cell according to aspects of the subject technology. Not all of the depicted components may be required, however, and one or more implementations may include additional components not shown in the figure. Variations in the arrangement and type of the components may be made without departing from the scope of the claims as set forth herein. Depicted or described connections and couplings between components are not limited to direct connections or direct couplings and may be implemented with one or more intervening components unless expressly stated otherwise.

As depicted in FIG. 2, MAC cell 200 includes input circuits 205, multiplexer circuit 210, integer multiplier circuits 215, and output circuits 220. According to aspects of the subject technology, input circuits 205 are selectable and configurable by the controller circuit to receive feature elements from the feature processor circuit and weight elements from the weight processor circuit and to generate corresponding feature values and weight values based on the data type of the feature elements and weight elements. Input circuits 205 may include, but are not limited to, sign circuit 225, mantissa circuit 230, exponent circuit 235, not-a-number/infinite (NaN/INF) circuit 240, and zero-point circuit 245.

According to aspects of the subject technology, sign circuit 225 is selected and configured for floating-point data types and includes suitable logic, circuitry, and/or code to extract sign bits from the input feature elements and the weight elements received from the feature processor circuit and the weight processor circuit to be multiplied as part of a convolution operation and determine output signs for the products of the input feature elements multiplied by the respective weight elements. The output signs are provided to output circuits 220 for further processing.

According to aspects of the subject technology, mantissa circuit 230 is selected and configured for floating-point data types and includes suitable logic, circuitry, and/or code to extract mantissas from the input feature elements and the weight elements received from the feature processor circuit and the weight processor circuit to be multiplied as part of the convolution operation. The bit size of the mantissas varies depending on the floating-point data type of the input feature elements and the weight elements. For example, eight-bit mantissas may be extracted from bfloat 16 data types, 11-bit mantissas may be extracted from float 16 data types, and 24-bit mantissas may be extracted from float32 data types.

According to aspects of the subject technology, exponent circuit 235 is selected and configured for floating-point data types and includes suitable logic, circuitry, and/or code to extract exponents from the input feature elements and the weight elements received from the feature processor circuit and the weight processor circuit. Exponent circuit 235 may be configured further to sum the exponents extracted from the input feature element and the weight element of each feature-weight pair to be multiplied as part of the convolution operation and determine the largest of the exponent sums generated as a maximum exponent sum. Exponent sum 235 may be configured further to subtract the exponent sum for each feature-weight pair from the maximum exponent sum for each feature-weight pair to determine a difference between the maximum exponent sum and the respective exponent sum for the feature-weight pair. The maximum exponent sum and the respective differences between the maximum exponent sum and the respective exponent sums are provided to output circuits 220 for further processing.

According to aspects of the subject technology, NaN/INF circuit 240 is selected and configured for floating-point data types and includes suitable logic, circuitry, and/or code to determine if any of the input feature elements or weight elements received from the feature processor circuit or the weight processor circuit are not an actual number or represent an infinite value based on the format of the floating-point data type. For example, an element of the float32 data type may be determined to not be an actual number if the exponent is equal to 255 and the mantissa is not equal to zero. The element of the float32 data type may be determined to represent an infinite value if the exponent equals 255 and the mantissa equals zero. Input feature elements and weight elements determined to not be an actual number or determined to represent an infinite value are provided to output circuits 220 for further processing.

According to aspects of the subject technology, zero-point circuit 245 is selected and configured for quantized integer data types and includes suitable logic, circuitry, and/or code to subtract a zero-point value from each of the quantized integer values of the input feature elements received from the feature processor circuit to generate a feature difference for each of the input feature elements. Zero-point circuit 245 is further configured to subtract a zero-point value from each of the quantized integer values of the weight elements received from the weight processor circuit to generate a weight difference for each of the weight elements received from the weight processor circuit. The zero-point value is the integer value in the quantized integer range of values (e.g., [-128, 127] for asymmetric quantization using INT8 data type) that maps to or corresponds to the zero value in the range of values of a different data type (e.g., float32) being quantized.

According to aspects of the subject technology, multiplexer circuit 210 includes suitable logic, circuitry, and/or code that may be configured by the controller circuit to distribute feature values and weight values received from input circuits 205 to respective integer multiplier circuits of integer multiplier circuits 215. The feature values and weight values may be mantissas, or portions of mantissas, when the input feature elements and the weight elements are a floating-point data type. When the input feature elements and the weight elements are quantized integer values, the feature values and the weight values may be the integer feature differences and integer weight differences determined using the zero-point values. Multiplexer circuit 210 is configured to provide a respective feature value and a respective weight value to a respective multiplier circuit, where the respective feature value and the respective weight value correspond to a feature-weight pair being multiplied as part of the convolution operation.

According to aspects of the subject technology, integer multiplier circuits 215 include suitable logic, circuitry, and/or code that may be configured by the controller circuit to perform integer multiplication of respective pairs of feature values and weight values received from multiplexer circuit 215 to generate respective products, which are provided to output circuits 220 for further processing. Integer multiplier circuits can be manufactured on smaller die spaces than that required by floating-point multiplier circuits. Accordingly, either more integer multiplier circuits can be arranged in the MAC cell than would be possible with floating-point multiplier circuits given the same die size, or the die size can be reduced to take advantage of the relatively smaller integer multiplier circuits.

The bit size of the integer multiplier circuits may be selected at design time to support multiple integer and floating-point data types. For example, nine-bit integer multiplier circuits can be used to multiply eight-bit integer data types (e.g., INT8, UINT8) as well as nine-bit integer values used in convolution operations of quantized eight-bit integer values, as described below. In addition, with different configurations of input circuits 205 and output circuits 220, nine-bit integer multiplier circuits can be used to multiply different floating-point data types such as bfloat16, floatl6, and float32. Examples of these configurations are described below.

According to aspects of the subject technology, output circuits 220 are selectable and configurable by the controller circuit to receive the products generated by integer multiplier circuits 215 and to generate a sum of the products based on the data types of the input feature elements and the weight elements provided for the convolution operation. The generated sum is provided to the accumulator circuit. Output circuits 220 may include, but are not limited to, shift circuits 250, 255, and 260, integer adder circuits 265 and 270, conversion circuits 275, and composition (RNC) circuit 280.

According to aspects of the subject technology, shift circuits 250, 255, and 260 include suitable logic, circuitry, and/or code that may be selected and configured by the controller circuit to perform shift operations to shift bits of the sums or products provided to these circuits. Shift circuits 250, 255, and 260 are not limited to any particular type of shift circuit and may be implemented using barrel shifters, shift registers, etc. In addition, shift circuits 250, 255, and 260 are not limited to all using the same type of shift circuit. The direction of the shifts and the number of spaces by which the bits are shifted may be configured based on the data types of the input feature elements and the weight elements. Examples of the selection and configuration of shift circuits 250, 255, and 260 are provided below.

According to aspects of the subject technology, integer adder circuits 265 and 270 include suitable logic, circuitry, and/or code that may be selected and configured by the controller circuit to perform integer addition operations to generate sums of the values provided to these circuits. The subject technology is not limited to any particular number of integer adder circuits 265, nor to any particular numbers of inputs for integer adder circuits 265 and 270. Examples of the selection and configuration of integer adder circuits 265 and 270 are provided below.

According to aspects of the subject technology, conversion circuits 275 include suitable logic, circuitry, and/or code that may be selected and configured by the controller circuit to generate two's complements of signed integer values provided to conversion circuits 275. Converting signed integer values to two's complements allows integer addition to be performed by integer adder circuit 270 that maintains the proper sign of the sum. The values provide to conversion circuits 275 correspond to respective products of multiplying pairs of input feature elements and weight elements, and the signs of these respective products are provided to conversion circuits 275 by sign circuit 225. Examples of the selection and configuration of conversion circuits 275 are provided below.

According to aspects of the subject technology, RNC circuit 280 includes suitable logic, circuitry, and/or code that may be selected and configured by the controller circuit to generate an output element that is provided to the accumulator circuit. The output element may be a floating-point data type that includes a sign bit, exponent bits, and mantissa bits. The number of exponent bits and/or the number of mantissa bits may vary depending on the floating-point data type being used. Generating the output element may include converting the sum provided to RNC circuit 280 from two's complement to a signed-magnitude value to determine the sign bit of the output element.

RNC circuit 280 may be further configured to round the magnitude value to reduce the number of bits (e.g., 53 bits rounded to 30 bits) and normalize the rounded value. For example, the magnitude value may be represented by a number of integer bits (e.g., 7 bits) followed by a number of fraction bits (e.g., 46 bits). The magnitude value may be rounded by truncating a portion of the fraction bits to leave a desired number of fraction bits (e.g., 23 bits). The rounded value may be normalized by shifting the bits to the right until the leftmost "1" bit in the rounded value is in the first integer bit location. If the leftmost "1" bit is already in the first integer bit location, no shifting is required. RNC circuit 280 is configured to use the fraction bits after rounding and normalization as the mantissa of the output element. If NaN/INF circuit 240 determined that one of the input feature elements and/or one of the weight elements had an infinite value, RNC circuit 280 may be configured to receive the notification from NaN/INF circuit 240 and set the mantissa value for the output element to zero. If NaN/INF circuit 240 determined that one of the input feature elements and/or one of the weight elements was not a real number, RNC circuit 280 may be configured to receive the notification from NaN/INF circuit 240 and force the mantissa of the output element to a predetermined value (e.g., 0x400000).

RNC circuit 280 may be further configured to generate the exponent of the output element based on the maximum exponent sum provided by exponent circuit 235 to RNC circuit 280. For example, the exponent of the output element may be set to the maximum exponent sum minus 127. If the maximum exponent sum provided by exponent circuit 235 is zero, or if the magnitude value provided to RNC circuit 280 is zero before normalization, RNC circuit 280 may be configured to force the exponent of the output element to be zero. If NaN/INF circuit 240 determined that one of the input feature elements and/or one of the weight elements was either not a real number or had an infinite value, RNC circuit 280 may be configured to force the exponent of the output element to the value 255.

All the components of MAC cell 200 may be implemented in a single semiconductor device, such as a system on a chip (SoC). Alternatively, one or more of the components of MAC cell 200 may be implemented in a semiconductor device separate from the other components and mounted on a printed circuit board, for example, with the other components to form a system. In addition, one or more circuit elements may be shared between multiple circuit components depicted in FIG. 2. The subject technology is not limited to these two alternatives and may be implemented using other combinations of chips, devices, packaging, etc. to implement MAC cell 200.

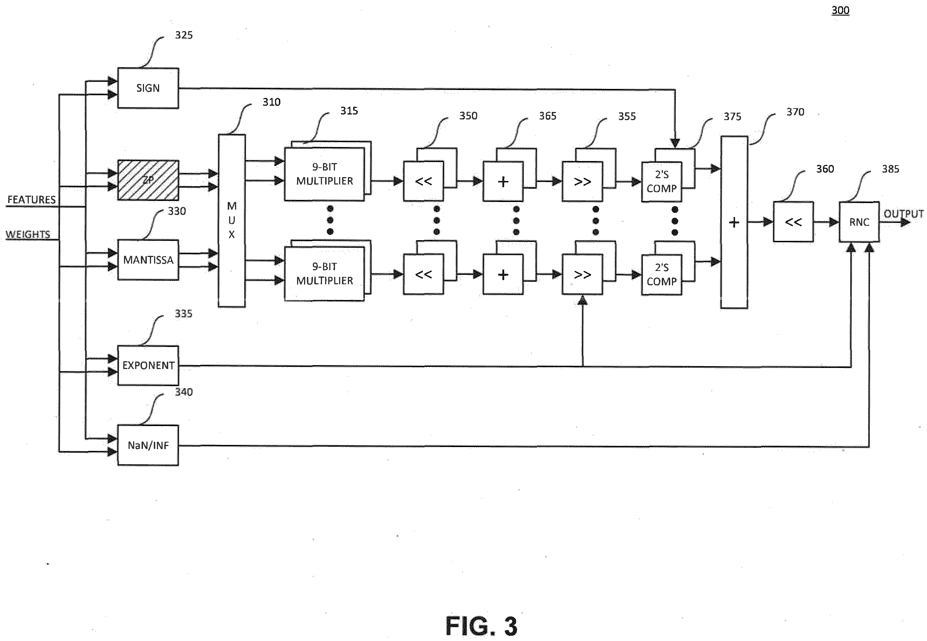

FIG. 3 is a block diagram depicting components of a MAC cell configured to multiply and accumulate input feature elements and weight elements having a floating-point data type according to aspects of the subject technology. Not all of the depicted components may be required, however, and one or more implementations may include additional components not shown in the figure. Variations in the arrangement and type of the components may be made without departing from the scope of the claims as set forth herein. Depicted or described connections and couplings between components are not limited to direct connections or direct couplings and may be implemented with one or more intervening components unless expressly stated otherwise.

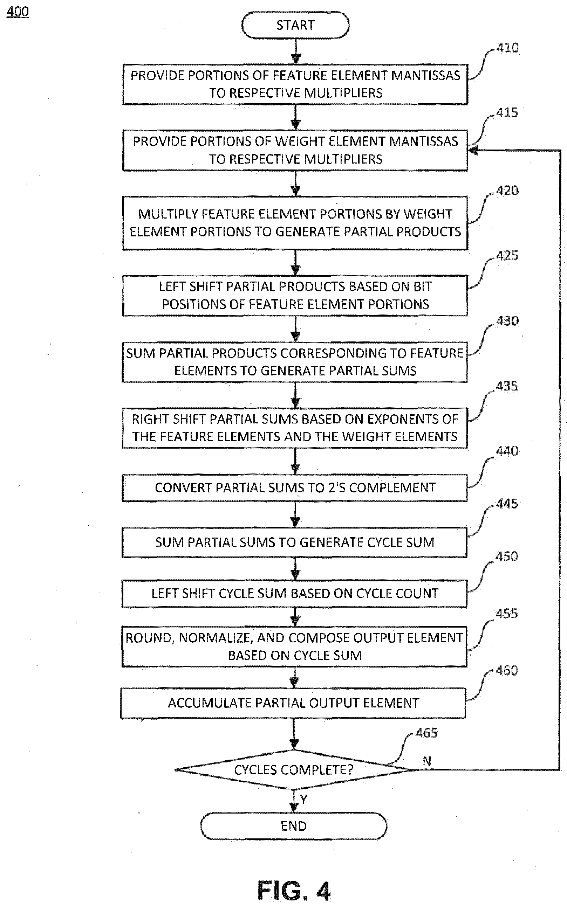

FIG. 4 contains a flowchart illustrating an example multiplication and accumulation operation of a MAC cell for a floating-point data type according to aspects of the subject technology. For explanatory purposes, the blocks of process 400 are described herein as occurring in serial, or linearly. However, multiple blocks of process 400 may occur in parallel. In addition, the blocks of process 400 need not be performed in the order shown and/or one or more blocks of process 400 need not be performed and/or can be replaced by other operations.

The operation of MAC cell 300 depicted in FIG. 3 will be described using the multiplication and accumulation process 400 illustrated in FIG. 4. The general operations of the components of MAC cell 300 are described above in connection with the commonly named components of MAC cell 200 depicted in FIG. 2 and will not be repeated here. The configuration and operation of MAC cell 300 will be described for the float32 data type.

According to aspects of the subject technology, process 400 may be started when the feature processor circuit provides a set of input feature elements to MAC cell 300 and the weight processor circuit provides a set of weight element to MAC cell 300. For example, a set of eight input feature element and a set of eight weight elements may be provided to MAC cell 300 for a multiplication and accumulation operation. Mantissa circuit 330 may extract the mantissas from each of the input feature elements and each of the weight elements, which may be read out from mantissa circuit 330 or received from mantissa circuit 330 by multiplexer circuit 310 to be distributed to respective integer multiplier circuits of integer multiplier circuits 315.

The mantissas extracted from elements of a float32 data type have 24 bits, which is larger than can be accommodated by a nine-bit integer multiplier circuit. Accordingly, multiplexer circuit 310 cannot provide the complete mantissa extracted from an input feature element and the complete mantissa extracted from a weight element to a nine-bit integer multiplier circuit for multiplication. According to aspects of the subject technology, multiplexer circuit 310 may be configured to divide the mantissas into portions and provide individual portions from the mantissas extracted from the input feature elements to respective integer multiplier circuits (block 410) and individual portions from the mantissas extracted from the weight elements to respective multiplier circuits (block 415) for multiplication.

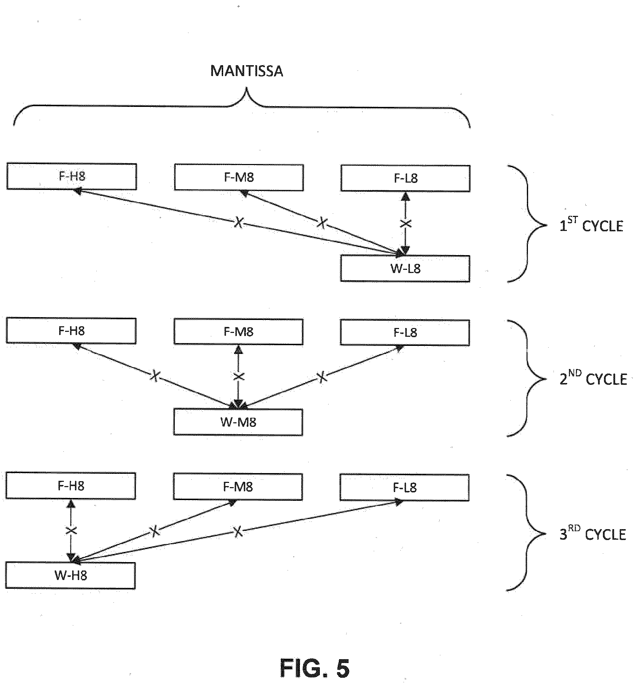

FIG. 5 is a block diagram depicting multiplication operations performed by the integer multiplier circuits on the portions of the mantissas according to aspects of the subject technology. According to aspects of the subject technology, each 24-bit mantissa extracted from an input feature element may be divided into three eight-bit portions represented in FIG. 5 as F-L8 for the lower eight bits of the mantissa, F-M8 for the middle eight bits of the mantissa, and F-H8 for the higher eight bits of the mantissa. Similarly, each 24-bit mantissa extracted from a weight element may be divided in to three eight-bit portions represented in FIG. 5 as W-L8 for the lower eight bits of the mantissa, W-M8 for the middle eight bits of the mantissa, and W-H8 for the higher eight bits of the mantissa.

According to aspects of the subject technology, multiplexer circuit 310 may be configured to provide the three eight-bit portions from the eight input feature elements to respective integer multiplier circuits of integer multiplier circuits 315 (block 410). MAC cell 300 may be implemented with 32 integer multiplier circuits, 24 of which would be selected and configured by the controller circuit for this operation. The subject technology is not limited to being implemented with 32 integer multiplier circuits and may implemented using more or less than 32 integer multiplier circuits.

In order to multiply the two mantissas using the mantissa portions, each portion of the mantissa extracted from the input feature element is multiplied by each portion of the mantissa extracted from the weight element, as represented in FIG. 5, and the products are summed. If the MAC cell includes a sufficient number of integer multiplier circuits, multiple instances of the mantissa portions from the input feature element may be provided to respective integer multiplier circuits to be multiplied by each of the mantissa portions extracted from the weight element. As noted above, MAC cell 300 may be implemented with 32 integer multiplier circuits and MAC cell 300 may be configured to execute the multiplication and accumulation operation over three cycles using 24 of the integer multiplier circuits in each cycle. As represented in FIG. 5, the W-L8 portion is provided to three integer multiplier circuits to be multiplied by the F-L8, F-M8, and F-H8 portions, respectively, in a first cycle (block 415). Similarly, the W-M8 portion is provided to three integer multiplier circuits to be multiplied by the F-L8, F-M8, and F-H8 portions, respectively, in a second cycle (block 415), and the W-H8 portion is provided to three integer multiplier circuits to be multiplied by the F-L8, F-M8, and F-H8 portions, respectively, in a third cycle (block 415).

The integer multiplier circuits may be configured to multiply the respective portions from the input feature element mantissas by the respective portions from the weight element mantissas in parallel to generate respective partial products (block 420). The bits of the partial products may need to be shifted to the left depending on the bit positions of the portion from the input feature element mantissa multiplied to generate the partial products. For example, partial products generated by multiplying the F-M8 portion of the mantissa (the middle eight bits of the mantissa) need to be shifted eight bits to the left and partial products generated by multiplying the F-H8 portion of the mantissa (the upper eight bits of the mantissa) need to be shifted sixteen bits to the left. According to aspects of the subject technology, individual shift circuits of shift circuits 250 may be coupled to respective integer multiplier circuits of integer multiplier circuits 315. The controller circuit may select and configure the shift circuits coupled to integer multiplier circuits that receive and multiply either the F-M8 portion or the F-H8 portion to shift the partial products either 8 bits to the left or 16 bits to the left, respectively (block 425).

According to aspects of the subject technology, integer adder circuits 365 may be selected and configured by the controller circuit to sum partial products that are generated using portions from the same input feature element mantissa (block 430). For example, referring to FIG. 5, the partial products generated by multiplying F-L8 by W-L8, F-M8 by W-L8, and F-H8 by W-L8 in the first cycle are added together by integer adder circuits 365 to generate a partial sum. Shift circuits 355 may be selected and configured by the controller circuit to shift the partial sums to the right based on the differences between the maximum exponent sum and the respective exponent sums generated and provided by exponent circuit 335 (block 435). For example, each partial sum is generated using the portions of the mantissa from a respective input feature element and a portion of the mantissa from a respective weight element. The sum of the exponents from the respective input feature element and the respective weight element is subtracted from the maximum exponent sum by exponent circuit 335 and shift circuits 355 are configured to shift the partial sum a number of bits to the right equal to the difference.

Conversion circuit 375 may be selected and configured by the controller circuit to generate two's complements of the partial sums based on the output signs provided by sign circuit 325 (block 440). For example, if the output sign determined by sign circuit 325 for an input feature element and weight element pair is negative, a two's complement of the partial sum generated using the mantissas for that pair is generated. If the output sign determined by sign circuit 325 is positive, the partial sum is left unchanged. Integer adder circuit 370 may be selected and configured by the controller circuit to sum the partial sums to generate a sum for the cycle (block 445). An advantage of converting the negative partial sums to two's complements is that integer adder circuit 370 can use addition operations identical to those used for unsigned integer values rather than the more complicated addition operations used for adding signed integer values.

According to aspects of the subject technology, shift circuit 360 may be selected and configured by the controller circuit to shift the sum for the cycle to the left based on a cycle count corresponding to the portion of the mantissa from the weight element (e.g., W-L8, W-M8, W-H8) currently being processed (block 450). The cycle count may be referenced to determine the bit position of the portions of the mantissas from the weight elements multiplied by the respective portions of the mantissas from the input feature elements. Referring again to FIG. 5, in the first cycle (e.g., cycle count of one) the W-L8 portion of the mantissa (lowest eight bits) is used in the multiplication operations executed by integer multiplier circuits 315 and no shift is required. However, in the second cycle (e.g., cycle count of two) the W-M8 portion (middle eight bits of the mantissa) is used in the multiplication operations which requires a shift of the sum to the left by eight bits to account for the bit position of the W-M8 portion in the mantissa. Similarly, in the third cycle (e.g., cycle count of three) the W-H8 portion (upper eight bits of the mantissa) is used in the multiplication operations which requires a shift of the sum to the left by sixteen bits to account for the bit position of the W-H8 portion in the mantissa.

According to aspects of the subject technology, composition (RNC) circuit 385 may be selected and configured by the controller circuit to generate an output element based on the sum received from shift circuit 360 (block 455). As discussed above, RNC circuit 385 may be configured to convert the sum from two's complement to a signed-magnitude format to determine the sign bit for the output element. RNC circuit 385 may further round and normalize the magnitude value to determine the mantissa bits for the output element. Finally, RNC circuit 385 determines the exponent bits for the output element based on the maximum exponent sum provided by exponent circuit 335. The generated output element is provided to the accumulation circuit to be accumulated with output elements from other MAC cells and from different cycles to generate the output tensor (block 460). If all of the portions of the mantissas from the weight elements have been applied in multiplication operations (i.e., cycles are complete) (block 465), the multiplication and accumulation process ends. If one or more portions of the mantissas from the weight elements have yet to be applied in multiplication operations (i.e., cycles remain) (block 465), multiplexer circuit 310 provides the next portions of the mantissas from the weight elements to the respective integer multipliers (block 415) and the process repeats the foregoing operations for the next cycle.

All the components of MAC cell 300 may be implemented in a single semiconductor device, such as a system on a chip (SoC). Alternatively, one or more of the components of MAC cell 300 may be implemented in a semiconductor device separate from the other components and mounted on a printed circuit board, for example, with the other components to form a system. In addition, one or more circuit elements may be shared between multiple circuit components depicted in FIG. 3. The subject technology is not limited to these two alternatives and may be implemented using other combinations of chips, devices, packaging, etc. to implement MAC cell 300.

The foregoing example described a multiplication and accumulation process for input feature elements and weight elements of a float32 data type. The configuration of MAC cell 300 and process 400 also may be applied to other data types. For example, the input feature elements and the weight elements provided to MAC cell 300 for the multiplication and accumulation process may be a float16 data type. For the float16 data type, sixteen input feature elements and sixteen weight elements may be provided to MAC cell 300. The bit size of the mantissa extracted from the input feature elements and the weight elements is eleven bits, which is larger than the bit size of integer multiplier circuits 315. However, the multi-cycle process illustrated in FIG. 4 may be used to perform the multiplication and accumulation operation.

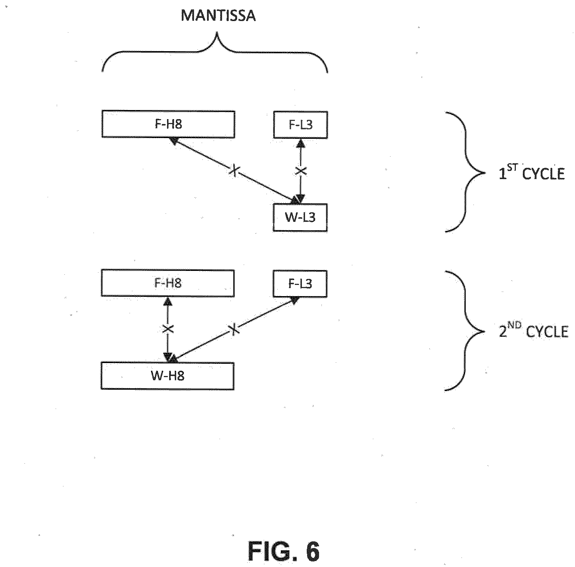

Similar to process for the float32 data type, portions of the mantissas extracted from the input feature elements and the weight elements are provided to respective ones of the integer multiplier circuits as described above in connection with process 400. FIG. 6 is a block diagram depicting multiplication operations performed by the integer multiplier circuits on the portions of the mantissas according to aspects of the subject technology. As depicted in FIG. 6, the 11-bit mantissas extracted from each of the input feature elements are divided into portion F-L3 (containing the lower three bits of the mantissa) and portion F-H8 (containing the upper eight bits of the mantissa. Similarly, the 11-bit mantissa extracted from each of the weight elements are divided into portion W-L3 (containing the lower three bits of the mantissa) and W-H8 (containing the upper eight bits of the mantissa). The subject technology is not limited to this division of the mantissas and may be implemented with different bit counts for the different portions of each mantissa.

According to aspects of the subject technology, process 400 is repeated for the sixteen input feature elements and the sixteen weight elements of the float 16 data type. As depicted in FIG. 6, the F-L3 portion and the F-H8 portion are provided to respective integer multiplier circuits for each of the input feature elements, and the W-L3 portion is provided to each of the respective integer multiplier circuits to by multiplied by the F-L3 portion and the F-H8 portion in a first cycle. For the second cycle, the W-H8 portion is provided to the respective integer multiplier circuits to be multiplied by the F-L3 portion and the F-H8 portion.

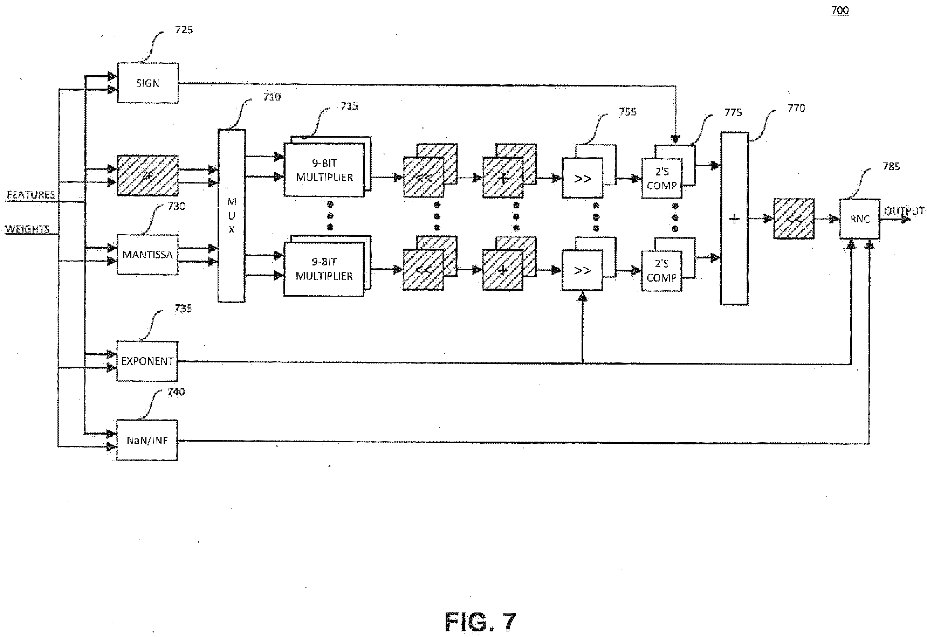

FIG. 7 is a block diagram depicting components of a MAC cell configured to multiply and accumulate input feature elements and weight elements having a floating-point data type according to aspects of the subject technology. Not all of the depicted components may be required, however, and one or more implementations may include additional components not shown in the figure. Variations in the arrangement and type of the components may be made without departing from the scope of the claims as set forth herein. Depicted or described connections and couplings between components are not limited to direct connections or direct couplings and may be implemented with one or more intervening components unless expressly stated otherwise.

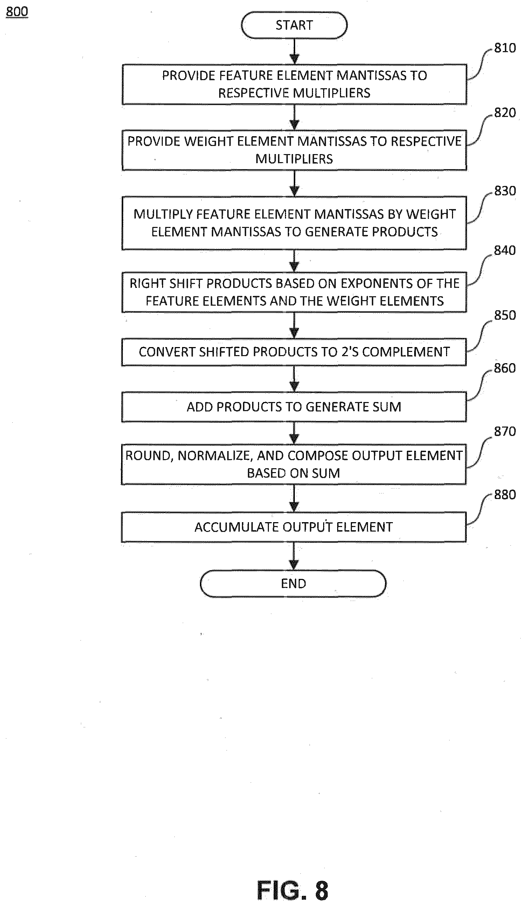

FIG. 8 contains a flowchart illustrating an example multiplication and accumulation operation of a MAC cell for a floating-point data type according to aspects of the subject technology. For explanatory purposes, the blocks of process 800 are described herein as occurring in serial, or linearly. However, multiple blocks of process 800 may occur in parallel. In addition, the blocks of process 800 need not be performed in the order shown and/or one or more blocks of process 800 need not be performed and/or can be replaced by other operations.

The operation of MAC cell 700 depicted in FIG. 7 will be described using the multiplication and accumulation process 800 illustrated in FIG. 8. The general operations of the components of MAC cell 700 are described above in connection with the commonly named components of MAC cell 200 depicted in FIG. 2 and will not be repeated here. The configuration and operation of MAC cell 700 will be described for the bfloat16 data type.

According to aspects of the subject technology, process 800 may be started when the feature processor circuit provides a set of input feature elements to MAC cell 700 and the weight processor circuit provides a set of weight element to MAC cell 700. For example, a set of sixteen input feature clements and a set of sixteen weight elements may be provided to MAC cell 700 for a multiplication and accumulation operation. Mantissa circuit 730 may extract the mantissas from each of the input feature elements and each of the weight elements, which may be read out from mantissa circuit 730 or received from mantissa circuit 730 by multiplexer circuit 710 to be distributed to respective integer multiplier circuits of integer multiplier circuits 715.

The mantissas extracted from elements of a bfloat16 data type have 8 bits which, unlike the float32 data type, can be accommodated by a nine-bit integer multiplier circuit. According to aspects of the subject technology, multiplexer circuit 310 may be selected and configured by the controller circuit to provide the mantissas extracted from the input feature elements to respective integer multiplier circuits (block 810) and the mantissas extracted from the weight elements to the respective integer multiplier circuits to be multiplied with corresponding mantissas from the input feature elements (block 820).

According to aspects of the subject technology, integer multiplier circuits 715 may be selected and configured by the controller circuit to multiply the mantissas from the input feature elements by respective mantissas from the weight elements to generate respective products (block 830). Each integer multiplier circuit may generate a product for a respective feature-weight pair made up of a respective input feature element and a respective weight element that are being multiplied as part of the multiplication and accumulation process.

According to aspects of the subject technology, shift circuits 755 may be selected and configured by the controller circuit to shift the products generated by integer multiplier circuits 715 to the right based on differences between the maximum exponent sum and the respective exponent sums generated and provided by exponent circuit 735 (block 840). For example, each product is generated using the mantissa from a respective input feature element and the mantissa from a respective weight element. The sum of the exponents from the respective input feature element and the respective weight element is subtracted from the maximum exponent sum by exponent circuit 735 and shift circuits 755 are configured to shift the product a number of bits to the right equal to the difference.

According to aspects of the subject technology, conversion circuit 775 may be selected and configured by the controller circuit to generate two's complements of the products based on the output signs provided by sign circuit 725 (block 850). For example, if the output sign determined by sign circuit 725 for an input feature element and weight element pair is negative, a two's complement of the product generated using the mantissas for that pair is generated. If the output sign determined by sign circuit 725 is positive, the product is left unchanged. Integer adder circuit 770 may be selected and configured by the controller circuit to add the products to generate a sum (block 860). An advantage of converting the negative products to two's complements is that integer adder circuit 770 can use addition operations identical to those used for unsigned integer values rather than the more complicated addition operations used for adding signed integer values.

According to aspects of the subject technology, composition (RNC) circuit 785 may be selected and configured by the controller circuit to generate an output element based on the sum generated by integer adder circuit 770 (block 870). As discussed above, RNC circuit 785 may be configured to convert the sum from two's complement to a signed-magnitude format to determine the sign bit for the output element. RNC circuit 785 may further round and normalize the magnitude value to determine the mantissa bits for the output element. Finally, RNC circuit 785 may determine the exponent bits for the output element based on the maximum exponent sum provided by exponent circuit 735. The generated output element is provided to the accumulation circuit to be accumulated with output elements from other MAC cells and from different cycles or iterations to generate the output tensor (block 880).

All the components of MAC cell 700 may be implemented in a single semiconductor device, such as a system on a chip (SoC). Alternatively, one or more of the components of MAC cell 700 may be implemented in a semiconductor device separate from the other components and mounted on a printed circuit board, for example, with the other components to form a system. In addition, one or more circuit elements may be shared between multiple circuit components depicted in FIG. 7. The subject technology is not limited to these two alternatives and may be implemented using other combinations of chips, devices, packaging, etc. to implement MAC cell 700.

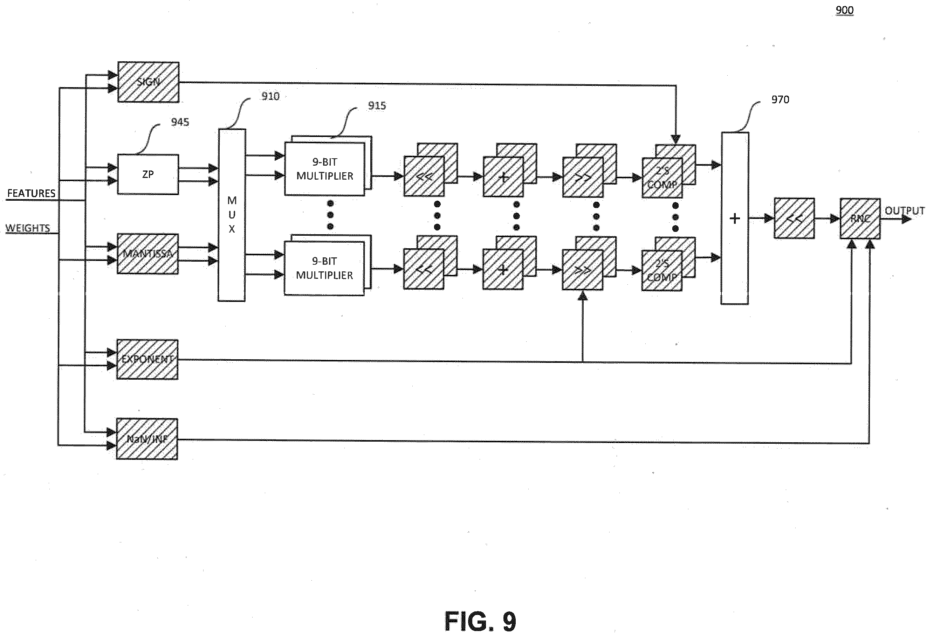

FIG. 9 is a block diagram depicting components of a MAC cell configured to multiply and accumulate input feature elements and weight elements having a quantized integer data type according to aspects of the subject technology. Not all of the depicted components may be required, however, and one or more implementations may include additional components not shown in the figure. Variations in the arrangement and type of the components may be made without departing from the scope of the claims as set forth herein. Depicted or described connections and couplings between components are not limited to direct connections or direct couplings and may be implemented with one or more intervening components unless expressly stated otherwise.

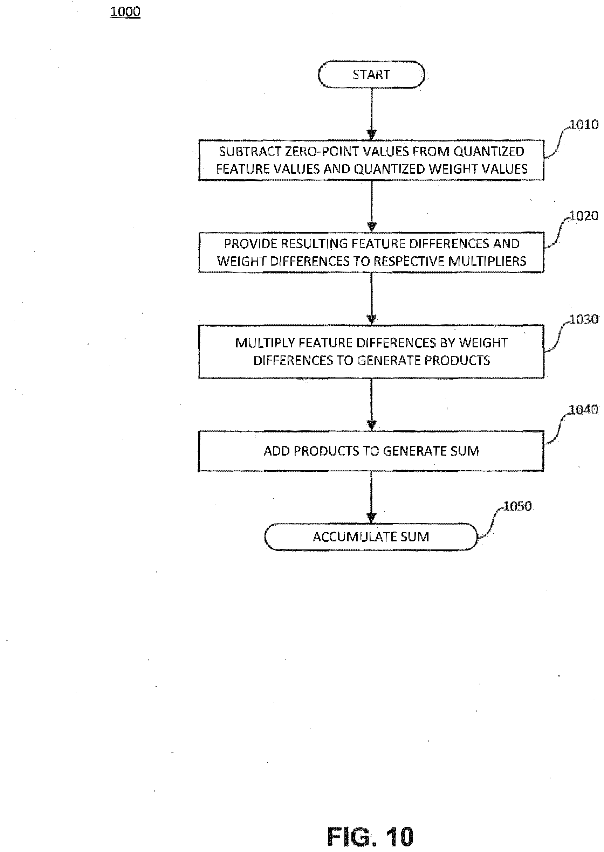

FIG. 10 contains a flowchart illustrating an example multiplication and accumulation operation of a MAC cell for a quantized integer data type according to aspects of the subject technology. For explanatory purposes, the blocks of process 1000 are described herein as occurring in serial, or linearly. However, multiple blocks of process 1000 may occur in parallel. In addition, the blocks of process 1000 need not be performed in the order shown and/or one or more blocks of process 1000 need not be performed and/or can be replaced by other operations.

The operation of MAC cell 900 depicted in FIG. 9 will be described using the multiplication and accumulation process 1000 illustrated in FIG. 10. The general operations of the components of MAC cell 900 are described above in connection with the commonly named components of MAC cell 200 depicted in FIG. 2 and will not be repeated here. The configuration and operation of MAC cell 900 will be described for the INT8 quantized integer data type.

Input feature elements and weight elements of the float32 data type may be quantized into an INT8 data type. However, these quantized integer values must be de-quantized to their respective real values for the multiplication and accumulation process provided by MAC cell 900. The eight-bit quantized integer value may approximate a floating-point value using the following formula:

$$real\_value = (int8\_value - zero\_point) \text{ x scale}$$

Using this equation, the output element generated by the multiplication and accumulation process may be represented by the following formula:

$$output\ element\ = \sum_{i=0}^{n} a_j^{(i)} b_k^{(i)} = \sum_{i=0}^{n} \left( q_a^{(i)} - z_a \right) * scale_a * \left( q_b^{(i)} - z_b \right) * scale_b$$

Where $a_j$ is the jth row of an m x n matrix A of quantized input feature elements, $b_k$ is the kth column of matrix B of quantized weight elements, $q_a$ is the quantized integer value for the input feature element, $z_a$ is the zero-point value for the input feature element quantization, $scale_a$ is the scale value for the input feature element quantization, $q_b$ is the quantized integer value for the weight element, $z_b$ is the zero-point value for the weight element quantization, and $scale_b$ is the scale value for the weight element quantization.

According to aspects of the subject technology, the scale values may be moved outside of the summation, which changes the output element formula to:

$$output\ element\ =\ scale_a * scale_b \sum_{i=0}^{n} \left( q_a^{(i)} - z_a \right) \left( q_b^{(i)} - z_b \right)$$

Implementing the zero-point values as INT8 data types allows MAC cell 900 to be used to generate the summation in the formula and the scale values can be applied to the result outside of the MAC cell, such as in the accumulator circuit or the post processor circuit.

Referring back to FIGs. 9 and 10, process 1000 may be initiated upon a set of quantized input feature elements being provided to MAC cell 900 by the feature processor circuit and a set of quantized weight elements being provided to MAC cell 900 by the weight processor circuit. For example, 32 eight-bit quantized input feature elements and 32 eight-bit quantized weight elements may be provided to MAC cell 900 for the multiplication and accumulation process.

According to aspects of the subject technology, zero-point circuit 945 may be selected and configured by the controller circuit to subtract the zero-point value for the input feature element quantization from each of the quantized input feature elements to generate respective feature differences and to subtract the zero-point value from the weight clement quantization from each of the quantized weight elements to generate respective weight differences (block 1010). The zero-point values may be provided to zero-point circuit 945 from the memory via the controller circuit.

According to aspects of the subject technology, multiplexer circuit 910 may be selected and configured by the controller circuit to read out or receive the feature differences and the weight differences from zero-point circuit 945 and provide the feature differences and the weight differences to respective integer multiplier circuits of integer multiplier circuits 915 (block 1020). Subtracting eight-bit zero-point values from eight-bit quantized values generates eight-bit difference values for symmetric quantization and nine-bit difference values for asymmetric quantization. Accordingly, multiplexer circuit 910 may be configured to provide a respective feature difference and a respective weight difference to each of the integer multiplier circuits, which may be nine-bit integer multiplier circuits.

According to aspects of the subject technology, integer multiplier circuits 915 may be selected and configured by the controller circuit to each multiply a respective feature difference by a respective weight different to generate a respective product (block 1030). Integer adder circuit 970 may be selected and configured by the controller circuit to add the products generated by integer multiplier circuits 915 to generate a sum (block 1040), which may be provided to the accumulator circuit (block 1050) to be accumulated with sums provided by other MAC cells and/or sums generated in different cycles or iterations to generate an output tensor. As noted above, the accumulator circuit or the post processor circuit may be configured to multiply the sum by the scale values.

All the components of MAC cell 900 may be implemented in a single semiconductor device, such as a system on a chip (SoC). Alternatively, one or more of the components of MAC cell 900 may be implemented in a semiconductor device separate from the other components and mounted on a printed circuit board, for example, with the other components to form a system. In addition, one or more circuit elements may be shared between multiple circuit components depicted in FIG. 9. The subject technology is not limited to these two alternatives and may be implemented using other combinations of chips, devices, packaging, etc. to implement MAC cell 900.

According to aspects of the subject technology, a device is provided that includes a plurality of integer multiplier circuits and a multiplexer circuit configured to provide portions of mantissas of a plurality of feature elements and portions of mantissas of a plurality of weight elements to respective integer multiplier circuits of the plurality of integer multiplier circuits, wherein the feature elements and the weight elements are floating-point data types, and wherein each integer multiplier circuit is configured to multiply a respective portion of the mantissa of a feature element by a respective portion of the mantissa of a weight element to generate a partial product. The device further includes a first shift circuit configured to shift bits of the partial products based on exponents of the plurality of feature elements and of the plurality of the weight elements, and a first integer adder circuit configured to add the shifted partial products to generate a sum. The device further includes a composition circuit configured to generate an output element based on the sum generated by the first integer adder circuit, the exponents of the plurality of feature elements, and the exponents of the plurality of weight elements.

The plurality of feature elements may be paired with the plurality of weight elements, respectively, to form a plurality of feature-weight pairs, and the device may further include an exponent circuit configured to add the exponents of the feature element and the weight element for each feature-weight pair to generate a respective exponent sum, determine a maximum exponent sum from the respective exponent sums, and for each feature-weight pair, determine a difference between the maximum component sum and the respective exponent sum. The first shift circuit may be configured to shift the bits of the partial products based on the respective differences between the maximum component sum and the respective exponent sums, and wherein the output element may be generated based on the maximum exponent sum.

The device may further include a sign circuit configured to determine an output sign for each feature-weight pair based on sign bits of the respective feature elements and weight elements, and a conversion circuit configured to generate two's complements of the shifted partial products based on the respective output signs prior to being added by the first integer adder circuit.

The composition circuit may be further configured to convert the sum generated by the first integer adder circuit from two's complement to signed-magnitude format, and round the converted sum to a predetermined bit length, wherein a sign bit of the output element is based on the converted sum, an exponent of the output element is based on the determined maximum exponent sum, and a mantissa of the output element is based on the rounded sum. The composition circuit may be further configured to normalize the rounded sum, and adjust the maximum exponent sum based on the normalization, wherein the exponent of the output element is based on the adjusted maximum exponent sum and the mantissa of the output element is based on the normalized sum.

A bit size of the mantissas of the plurality of feature elements and the plurality of weight elements may be greater than a bit size of the plurality of integer multiplier circuits. The multiplexer circuit may be further configured to, for each feature-weight pair, provide different portions of the mantissa of the feature element to different respective integer multiplier circuits, and provide one portion of the mantissa of the corresponding weight element to each of the different respective integer multiplier circuits, wherein a different portion of the mantissa of the corresponding weight element is provided to each of the different respective integer multiplier circuits during different cycles of the device.

The device may further include a second shift circuit configured to shift bits of the partial products generated by the different respective integer multiplier circuits based on a bit position of the portion of the mantissa of the feature element multiplied to generate the respective partial products, and a second integer adder circuit configured to add the shifted partial products corresponding to each of the feature elements to generate respective partial sums. The first shift circuit may be configured to shift the bits of the partial sums based on the determined difference between the maximum component sum and the respective exponent sum of the corresponding feature-weight pair, the conversion circuit may be configured to generate two's complements of the shifted partial sums, and wherein the first integer adder circuit may be configured to add the shifted partial sums to generate the sum.

The device may further include a third shift circuit configured to shift bits of the sum generated by the first integer adder circuit based on a cycle count of the device, wherein the composition circuit generates the output element based on the shifted sum. The composition circuit may be configured to provide the output element to an accumulator circuit.

According to aspects of the subject technology, a device may-be provided that includes a zero-point circuit configured to subtract a feature zero-point value from each quantized feature value of a plurality of quantized feature values to generate a plurality of feature differences, and a weight zero-point value from each quantized weight value of a plurality of quantized weight values to generate a plurality of weight differences, wherein the feature zero-point value, the plurality of quantized feature values, the weight zero-point value, and the plurality of quantized weight values are all a same integer data type. The device further includes a plurality of integer multiplier circuits, a multiplexer circuit configured to provide the feature differences to respective integer multiplier circuits of the plurality of integer multiplier circuits and the weight differences to respective integer multiplier circuits of the plurality of integer multiplier circuits, wherein each integer multiplier circuit is configured to multiply a respective feature difference by a respective weight difference to generate a product, and an integer adder circuit configured to add the products to generate a sum, wherein the sum is provided to an accumulator circuit.

The feature zero-point value, the plurality of quantized feature values, the weight zero-point value, and the plurality of quantized weight values all may be an eight-bit integer data type, and the plurality of integer multiplier circuits may be nine-bit multiplier circuits. Each of the plurality of quantized feature values may be a quantization of a respective floating-point feature element and each of the plurality of quantized weight values may be a quantization of a respective floating-point weight element. The floating-point feature elements and the floating-point weight elements may be a 32-bit floating-point data type.

According to aspects of the subject technology, a system is provided that includes a controller circuit, an accumulator circuit, and a plurality of multiplication and accumulation (MAC) cells. Each of the plurality of MAC cells includes a plurality of integer multiplier circuits, input circuits configured to receive a set of feature elements of an input tensor and a set of weight elements of a kernel and generate corresponding sets of feature values and weight values, a multiplexer circuit configured to provide the feature values and the weight values from the input circuits to respective integer multiplier circuits of the plurality of integer multiplier circuits, wherein each integer multiplier circuit is configured to multiply a respective feature value by a respective weight value to generate a product, and output circuits configured to receive the products generated by the plurality of integer multiplier circuits, generate a sum of the products, and provide the sum to the accumulator circuit. The controller circuit is configured to configure the plurality of MAC cells for a data type selected from a plurality of integer and floating-point data types supported by the system, and the accumulator circuit is configured to accumulate the sums generated by the plurality of MAC cells to generate an output tensor representing a convolution of the input tensor and the kernel.

The system may further include a feature processor circuit configured to receive, from a memory, feature elements of the input tensor and provide the feature elements to the plurality of MAC cells, and a weight processor circuit configured to receive, from the memory, weight elements of the kernel and provide the weight elements to the plurality of MAC cells.

The integer multiplier circuits may nine-bit multiplier circuits, and the plurality of integer and floating-point data types may include eight-bit data types, 16-bit data types, and 32-bit data types. The feature values and the weight values may comprise mantissas of the feature elements and the weight elements. The multiplexer circuit in each of the plurality of MAC cells may be configured to, for each feature value and weight value multiplied by the integer multiplier circuits, provide different portions of the mantissa of the feature element to different respective integer multiplier circuits, and provide one portion of the mantissa of the corresponding weight element to each of the different respective integer multiplier circuits, wherein a different portion of the mantissa of the corresponding weight element is provided to each of the different respective integer multiplier circuits during different cycles of a plurality of cycles.

The accumulator circuit may be configured to accumulate the sums generated by the plurality of MAC cells for the plurality of cycles to generate the output tensor. Each of the plurality of MAC cells may further include a composition circuit configured to round and normalize the sum for a mantissa of a floating-point output element provided to the accumulator circuit.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The predicate words "configured to", "operable to", and "programmed to" do not imply any particular tangible or intangible modification of a subject, but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

The word "example" is used herein to mean "serving as an example or illustration." Any aspect or design described herein as "example" is not necessarily to be construed as preferred or advantageous over other aspects or designs.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology,

**Claims**

1.  A device, comprising:

    a plurality of integer multiplier circuits (215, 315);
    a multiplexer circuit (210, 310) configured to provide portions of mantissas of a plurality of feature elements and portions of mantissas of a plurality of weight elements to respective integer multiplier circuits (215, 315) of the plurality of integer multiplier circuits (215, 315), wherein the feature elements and the weight elements are floating-point data types, and wherein each integer multiplier circuit (215, 315) is configured to multiply a respective portion of the mantissa of a feature element by a respective portion of the mantissa of a weight element to generate a partial product;
    a first shift circuit (250, 350) configured to shift bits of the partial products based on exponents of the plurality of feature elements and of the plurality of the weight elements;
    a first integer adder circuit (265, 365) configured to add the shifted partial products to generate a sum; and
    a composition circuit (280, 380) configured to generate an output element based on the sum generated by the first integer adder circuit (265, 365), the exponents of the plurality of feature elements, and the exponents of the plurality of weight elements.

2.  The device of claim 1, wherein the plurality of feature elements are paired with the plurality of weight elements, respectively, to form a plurality of feature-weight pairs,

    wherein the device further comprises an exponent circuit configured to:

    add the exponents of the feature element and the weight element for each feature-weight pair to generate a respective exponent sum;
    determine a maximum exponent sum from the respective exponent sums; and
    for each feature-weight pair, determine a difference between the maximum component sum and the respective exponent sum,

    wherein the first shift circuit (250, 350) is configured to shift the bits of the partial products based on the respective differences between the maximum component sum and the respective exponent sums, and
    wherein the output element is generated based on the maximum exponent sum.

3.  The device of claim 2, further comprising:

    a sign circuit configured to determine an output sign for each feature-weight pair based on sign bits of the respective feature elements and weight elements; and
    a conversion circuit (275, 375) configured to generate two's complements of the shifted partial products based on the respective output signs prior to being added by the first integer adder circuit (265, 365).

4.  The device of claim 3, wherein the composition circuit (280, 380) is further configured to:

    convert the sum generated by the first integer adder circuit (265, 365) from two's complement to signed-magnitude format; and
    round the converted sum to a predetermined bit length,
    wherein a sign bit of the output element is based on the converted sum, an exponent of the output element is based on the determined maximum exponent sum, and a mantissa of the output element is based on the rounded sum.

5.  The device of claim 4, wherein a bit size of the mantissas of the plurality of feature elements and the plurality of weight elements is greater than a bit size of the plurality of integer multiplier circuits (215, 315).

6.  The device of claim 5, wherein the multiplexer circuit (210, 310) is further configured to, for each feature-weight pair:

    provide different portions of the mantissa of the feature element to different respective integer multiplier circuits (215, 315); and
    provide one portion of the mantissa of the corresponding weight element to each of the different respective integer multiplier circuits (215, 315),

wherein a different portion of the mantissa of the corresponding weight element is provided to each of the different respective integer multiplier circuits (215, 315) during different cycles of the device.

7. The device of claim 6, further comprising:

a second shift circuit (255, 355) configured to shift bits of the partial products generated by the different respective integer multiplier circuits (215, 315) based on a bit position of the portion of the mantissa of the feature element multiplied to generate the respective partial products; and
a second integer adder circuit (270, 370) configured to add the shifted partial products corresponding to each of the feature elements to generate respective partial sums,
wherein the first shift circuit (250, 350) is configured to shift the bits of the partial sums based on the determined difference between the maximum component sum and the respective exponent sum of the corresponding feature-weight pair,
wherein the conversion circuit (275, 375) is configured to generate two's complements of the shifted partial sums, and
wherein the first integer adder circuit (265, 365) is configured to add the shifted partial sums to generate the sum.

8. The device of claim 7, further comprising:

a third shift circuit configured to shift bits of the sum generated by the first integer adder circuit based on a cycle count of the device,
wherein the composition circuit (280, 380) generates the output element based on the shifted sum.

9. The device of claim 8, wherein the composition circuit (280, 380) is configured to provide the output element to an accumulator circuit.


**Patentansprüche**

1. Vorrichtung, umfassend:

eine Vielzahl von Integer-Multipliziererschaltungen (215, 315);
eine Multiplexerschaltung (210, 310), die so konfiguriert ist, dass sie Anteile von Mantissen einer Vielzahl von Merkmalselementen und Anteile von Mantissen einer Vielzahl von Gewichtungselementen an die jeweiligen Integer-Multipliziererschaltungen (215, 315) der Vielzahl von Integer-Multipliziererschaltungen (215, 315) zu liefern, wobei die Merkmalselemente und die Gewichtungselemente Fließkommadatentypen sind und wobei jede Integer-Multipliziererschaltung (215, 315) so konfiguriert ist, dass sie einen jeweiligen Anteil der Mantisse eines Merkmalselements mit einem jeweiligen Anteil der Mantisse eines Gewichtungselements multipliziert, um ein Teilprodukt zu erzeugen;
eine erste Verschiebungsschaltung (250, 350), die so konfiguriert ist, dass sie Bits der Teilprodukte basierend auf Exponenten der Vielzahl von Merkmalselementen und der Vielzahl von Gewichtungselementen verschiebt;
eine erste Integer-Addiererschaltung (265, 365), die so konfiguriert ist, dass sie die verschobenen Teilprodukte addiert, um eine Summe zu erzeugen; und
eine Zusammensetzungsschaltung (280, 380), die so konfiguriert ist, dass sie ein Ausgangselement basierend auf der von der ersten Integer-Addiererschaltung (265, 365) erzeugten Summe, der Exponenten der Vielzahl von Merkmalselementen und der Exponenten der Vielzahl von Gewichtungselementen erzeugt.

2. Vorrichtung nach Anspruch 1, wobei die Vielzahl von Merkmalselementen jeweils mit der Vielzahl von Gewichtungselementen gepaart ist, um eine Vielzahl von Merkmals-Gewichtungspaaren zu bilden,
wobei die Vorrichtung ferner eine Exponentenschaltung umfasst, die so konfiguriert ist, dass sie:

die Exponenten des Merkmalselements und des Gewichtungselements für jedes Merkmals-Gewichtungspaar addiert, um eine jeweilige Exponenten-Summe zu erzeugen;
eine maximale Exponenten-Summe aus den jeweiligen Exponenten-Summen bestimmt; und
für jedes Merkmals-Gewichtungspaar eine Differenz zwischen der maximalen Komponentensumme und der jeweiligen Exponenten-Summe bestimmt,
wobei die erste Verschiebungsschaltung (250, 350) so konfiguriert ist, dass sie die Bits der Teilprodukte basierend auf den jeweiligen Differenzen zwischen der maximalen Komponentensumme und den jeweiligen Exponenten-Summen verschiebt, und

wobei das Ausgangselement basierend auf der maximalen Exponenten-Summe erzeugt wird.

3. Vorrichtung nach Anspruch 2, ferner umfassend:

eine Vorzeichenschaltung, die so konfiguriert ist, dass sie ein Ausgangsvorzeichen für jedes Merkmals-Gewichtungspaar basierend auf den Vorzeichenbits der jeweiligen Merkmalselemente und Gewichtungselemente bestimmt; und

eine Umwandlungsschaltung (275, 375), die so konfiguriert ist, dass sie Zweierkomplemente der verschobenen Teilprodukte basierend auf den jeweiligen Ausgangsvorzeichen erzeugt, bevor sie von der ersten Integer-Addiererschaltung (265, 365) addiert werden.

4. Vorrichtung nach Anspruch 3, wobei die Zusammensetzungsschaltung (280, 380) ferner konfiguriert ist, um:

die von der ersten Integer-Addiererschaltung (265, 365) erzeugte Summe von einem Zweierkomplement in ein Vorzeichen-Größenformat umzuwandeln; und

die umgewandelte Summe auf eine vorbestimmte Bitlänge zu runden,

wobei ein Vorzeichenbit des Ausgangselements auf der umgewandelten Summe basiert, ein Exponent des Ausgangselements auf der bestimmten maximalen Exponenten-Summe basiert und eine Mantisse des Ausgangselements auf der gerundeten Summe basiert.

5. Vorrichtung nach Anspruch 4, wobei eine Bitgröße der Mantissen der Vielzahl von Merkmalselementen und der Vielzahl von Gewichtungselementen größer als eine Bitgröße der Vielzahl von Integer-Multipliziererschaltungen (215, 315) ist.

6. Vorrichtung nach Anspruch 5, wobei die Multiplexerschaltung (210, 310) ferner so konfiguriert ist, dass sie für jedes Merkmals-Gewichtungspaar:

verschiedene Anteile der Mantisse des Merkmalselements an verschiedene jeweilige Integer-Multipliziererschaltungen (215, 315) liefert; und

einen Anteil der Mantisse des entsprechenden Gewichtungselements an jede der verschiedenen jeweiligen Integer-Multipliziererschaltungen (215, 315) liefert,

wobei ein anderer Anteil der Mantisse des entsprechenden Gewichtungselements während verschiedener Zyklen der Vorrichtung an jede der verschiedenen jeweiligen Integer-Multipliziererschaltungen (215, 315) geliefert wird.

7. Vorrichtung nach Anspruch 6, ferner umfassend:

eine zweite Schiebeschaltung (255, 355), die so konfiguriert ist, dass sie Bits der Teilprodukte verschiebt, die von den verschiedenen jeweiligen Integer-Multipliziererschaltungen (215, 315) basierend auf einer Bitposition des Anteils der Mantisse des Merkmalselements erzeugt werden, multipliziert, um die jeweiligen Teilprodukte zu erzeugen; und

eine zweite Integer-Addiererschaltung (270, 370), die so konfiguriert ist, dass sie die verschobenen Teilprodukte, die jedem der Merkmalselemente entsprechen, addiert, um jeweilige Teilsummen zu erzeugen,

wobei die erste Schiebeschaltung (250, 350) so konfiguriert ist, dass sie die Bits der Teilsummen basierend auf der ermittelten Differenz zwischen der maximalen Komponentensumme und der jeweiligen Exponentensumme des entsprechenden Merkmals-Gewichtungspaares verschiebt,

wobei die Umwandlungs-Schaltung (275, 375) so konfiguriert ist, dass sie Zweierkomplemente der verschobenen Teilsummen erzeugt, und

wobei die erste Integer-Addiererschaltung (265, 365) so konfiguriert ist, dass sie die verschobenen Teilsummen addiert, um die Summe zu erzeugen.

8. Vorrichtung nach Anspruch 7, ferner umfassend:

eine dritte Verschiebungsschaltung, die so konfiguriert ist, dass sie Bits der von der ersten Integer-Addiererschaltung erzeugten Summe basierend auf einer Zykluszählung der Vorrichtung verschiebt,

wobei die Zusammensetzungsschaltung (280, 380) das Ausgangselement basierend auf der verschobenen Summe erzeugt.

9. Vorrichtung nach Anspruch 8, wobei die Zusammensetzungsschaltung (280, 380) so konfiguriert ist, dass sie das Ausgangselement an eine Akkumulator-Schaltung liefert.

**Revendications**

1. Dispositif, comprenant :

une pluralité de circuits multiplicateurs d'entiers (215, 315) ;
un circuit multiplexeur (210, 310) configuré pour fournir des parties de mantisse d'une pluralité d'éléments de caractéristique et des parties de mantisse d'une pluralité d'éléments de pondération à des circuits multiplicateurs d'entiers (215, 315) respectifs de la pluralité de circuits multiplicateurs d'entiers (215, 315), dans lequel les éléments de caractéristique et les éléments de pondération sont des types de données à virgule flottante, et dans lequel chaque circuit multiplicateur d'entiers (215, 315) est configuré pour multiplier une partie respective de la mantisse d'un élément de caractéristique par une partie respective de la mantisse d'un élément de pondération afin de générer un produit partiel ;
un premier circuit de décalage (250, 350) configuré pour décaler les bits des produits partiels sur la base des exposants de la pluralité d'éléments de caractéristique et de la pluralité d'éléments de pondération ;
un premier circuit additionneur d'entiers (265, 365) configuré pour additionner les produits partiels décalés afin de générer une somme ; et
un circuit de composition (280, 380) configuré pour générer un élément de sortie sur la base de la somme générée par le premier circuit additionneur d'entiers (265, 365), des exposants de la pluralité d'éléments de caractéristique, et des exposants de la pluralité d'éléments de pondération.

2. Dispositif selon la revendication 1, dans lequel la pluralité d'éléments de caractéristique sont appariés avec la pluralité d'éléments de pondération, respectivement, pour former une pluralité de paires caractéristique-poids,

dans lequel le dispositif comprend en outre un circuit d'exposants configuré pour :

additionner les exposants de l'élément de caractéristique et de l'élément de pondération pour chaque paire caractéristique-poids afin de générer une somme d'exposants respective ;
déterminer une somme d'exposants maximale à partir des sommes d'exposants respectives ; et
pour chaque paire caractéristique-poids, déterminer une différence entre la somme maximale des composantes et la somme d'exposants respective,

dans lequel le premier circuit de décalage (250, 350) est configuré pour décaler les bits des produits partiels sur la base des différences respectives entre la somme des composantes maximale et les sommes d'exposants respectives, et
dans lequel l'élément de sortie est généré sur la base de la somme d'exposants maximale.

3. Dispositif selon la revendication 2, comprenant en outre :

un circuit de signe configuré pour déterminer un signe de sortie pour chaque paire caractéristique-poids sur la base des bits de signe des éléments de caractéristique et des éléments de pondération respectifs ; et
un circuit de conversion (275, 375) configuré pour générer des compléments à deux des produits partiels décalés sur la base des signes de sortie respectifs avant leur addition par le premier circuit additionneur d'entiers (265, 365).

4. Dispositif selon la revendication 3, dans lequel le circuit de composition (280, 380) est en outre configuré pour :

convertir la somme générée par le premier circuit additionneur d'entiers (265, 365) du format complément à deux au format signe-magnitude ; et
arrondir la somme convertie à une longueur de bit prédéterminée,
dans lequel un bit de signe de l'élément de sortie est basé sur la somme convertie, un exposant de l'élément de sortie est basé sur la somme d'exposants maximale déterminée, et une mantisse de l'élément de sortie est basée sur la somme arrondie.

**5.** Dispositif selon la revendication 4, dans lequel une taille de bit des mantisses de la pluralité d'éléments de caractéristique et de la pluralité d'éléments de pondération est supérieure à une taille de bit de la pluralité de circuits multiplicateurs d'entiers (215, 315).

**6.** Dispositif selon la revendication 5, dans lequel le circuit multiplexeur (210, 310) est en outre configuré pour, pour chaque paire caractéristique-poids :

fournir différentes parties de la mantisse de l'élément de caractéristique à différents circuits multiplicateurs d'entiers (215, 315) respectifs ; et
fournir une partie de la mantisse de l'élément de pondération correspondant à chacun des différents circuits multiplicateurs d'entiers (215, 315) respectifs ;
dans lequel une partie différente de la mantisse de l'élément de pondération correspondant est fournie à chacun des différents circuits multiplicateurs d'entiers (215, 315) respectifs au cours de cycles différents du dispositif.

**7.** Dispositif selon la revendication 6, comprenant en outre :

un deuxième circuit de décalage (255, 355) configuré pour décaler les bits des produits partiels générés par les différents circuits multiplicateurs d'entiers (215, 315) respectifs en fonction d'une position de bit de la partie de la mantisse de l'élément de caractéristique multipliée afin de générer les produits partiels respectifs ; et
un deuxième circuit additionneur d'entiers (270, 370) configuré pour additionner les produits partiels décalés correspondant à chacun des éléments de caractéristique afin de générer des sommes partielles respectives,
dans lequel le premier circuit de décalage (250, 350) est configuré pour décaler les bits des sommes partielles sur la base de la différence déterminée entre la somme de composantes maximale et la somme d'exposants respective de la paire caractéristique-poids correspondante,
dans lequel le circuit de conversion (275, 375) est configuré pour générer des compléments à deux des sommes partielles décalées, et
dans lequel le premier circuit additionneur d'entiers (265, 365) est configuré pour additionner les sommes partielles décalées afin de générer la somme.

**8.** Dispositif selon la revendication 7, comprenant en outre :

un troisième circuit de décalage configuré pour décaler des bits de la somme générée par le premier circuit additionneur d'entiers sur la base d'un nombre de cycles du dispositif,
dans lequel le circuit de composition (280, 380) génère l'élément de sortie sur la base de la somme décalée.

**9.** Dispositif selon la revendication 8, dans lequel le circuit de composition (280, 380) est configuré pour fournir l'élément de sortie à un circuit accumulateur.

**FIG. 1**

**FIG. 2**

EP 4 312 119 B1

**FIG. 3**

400

```
                    ┌──────────────┐
                    │    START     │
                    └──────┬───────┘
                           ▼
    ┌───────────────────────────────────────────┐  ╭─410
    │ PROVIDE PORTIONS OF FEATURE ELEMENT MANTISSAS │
    │        TO RESPECTIVE MULTIPLIERS           │
    └──────────────────┬────────────────────────┘
                       ▼                           ╭─415
    ┌───────────────────────────────────────────┐
    │ PROVIDE PORTIONS OF WEIGHT ELEMENT MANTISSAS │◄──┐
    │        TO RESPECTIVE MULTIPLIERS           │    │
    └──────────────────┬────────────────────────┘    │
                       ▼                           ╭─420 │
    ┌───────────────────────────────────────────┐    │
    │  MULTIPLY FEATURE ELEMENT PORTIONS BY WEIGHT │    │
    │ ELEMENT PORTIONS TO GENERATE PARTIAL PRODUCTS │    │
    └──────────────────┬────────────────────────┘    │
                       ▼                           ╭─425 │
    ┌───────────────────────────────────────────┐    │
    │   LEFT SHIFT PARTIAL PRODUCTS BASED ON BIT  │    │
    │    POSITIONS OF FEATURE ELEMENT PORTIONS    │    │
    └──────────────────┬────────────────────────┘    │
                       ▼                           ╭─430 │
    ┌───────────────────────────────────────────┐    │
    │ SUM PARTIAL PRODUCTS CORRESPONDING TO FEATURE │    │
    │    ELEMENTS TO GENERATE PARTIAL SUMS        │    │
    └──────────────────┬────────────────────────┘    │
                       ▼                           ╭─435 │
    ┌───────────────────────────────────────────┐    │
    │  RIGHT SHIFT PARTIAL SUMS BASED ON EXPONENTS OF │  │
    │ THE FEATURE ELEMENTS AND THE WEIGHT ELEMENTS │    │
    └──────────────────┬────────────────────────┘    │
                       ▼                           ╭─440 │
    ┌───────────────────────────────────────────┐    │
    │     CONVERT PARTIAL SUMS TO 2'S COMPLEMENT   │    │
    └──────────────────┬────────────────────────┘    │
                       ▼                           ╭─445 │
    ┌───────────────────────────────────────────┐    │
    │    SUM PARTIAL SUMS TO GENERATE CYCLE SUM   │    │
    └──────────────────┬────────────────────────┘    │
                       ▼                           ╭─450 │
    ┌───────────────────────────────────────────┐    │
    │   LEFT SHIFT CYCLE SUM BASED ON CYCLE COUNT  │    │
    └──────────────────┬────────────────────────┘    │
                       ▼                           ╭─455 │
    ┌───────────────────────────────────────────┐    │
    │ ROUND, NORMALIZE, AND COMPOSE OUTPUT ELEMENT │    │
    │          BASED ON CYCLE SUM                 │    │
    └──────────────────┬────────────────────────┘    │
                       ▼                           ╭─460 │
    ┌───────────────────────────────────────────┐    │
    │     ACCUMULATE PARTIAL OUTPUT ELEMENT       │    │
    └──────────────────┬────────────────────────┘    │
                       ▼             ╭─465            │
                  ╱─────────────╲     N              │
                 ╱ CYCLES COMPLETE? ╲───────────────┘
                  ╲─────────────╱
                       │ Y
                       ▼
                 ┌──────────┐
                 │   END    │
                 └──────────┘
```

# FIG. 4

FIG. 5

FIG. 6

**FIG. 7**

<u>800</u>

START

PROVIDE FEATURE ELEMENT MANTISSAS TO RESPECTIVE MULTIPLIERS
— 810

PROVIDE WEIGHT ELEMENT MANTISSAS TO RESPECTIVE MULTIPLIERS
— 820

MULTIPLY FEATURE ELEMENT MANTISSAS BY WEIGHT ELEMENT MANTISSAS TO GENERATE PRODUCTS
— 830

RIGHT SHIFT PRODUCTS BASED ON EXPONENTS OF THE FEATURE ELEMENTS AND THE WEIGHT ELEMENTS
— 840

CONVERT SHIFTED PRODUCTS TO 2'S COMPLEMENT
— 850

ADD PRODUCTS TO GENERATE SUM
— 860

ROUND, NORMALIZE, AND COMPOSE OUTPUT ELEMENT BASED ON SUM
— 870

ACCUMULATE OUTPUT ELEMENT
— 880

END

# FIG. 8

FIG. 9

1000

```
                    ┌─────────────┐
                    │    START    │
                    └──────┬──────┘
                           │
                           ▼
        ┌──────────────────────────────────────┐   1010
        │ SUBTRACT ZERO-POINT VALUES FROM        │
        │ QUANTIZED FEATURE VALUES AND           │
        │ QUANTIZED WEIGHT VALUES                │
        └──────────────────┬───────────────────┘
                           │
                           ▼
        ┌──────────────────────────────────────┐   1020
        │ PROVIDE RESULTING FEATURE DIFFERENCES  │
        │ AND WEIGHT DIFFERENCES TO RESPECTIVE   │
        │ MULTIPLIERS                            │
        └──────────────────┬───────────────────┘
                           │
                           ▼
        ┌──────────────────────────────────────┐   1030
        │ MULTIPLY FEATURE DIFFERENCES BY WEIGHT │
        │ DIFFERENCES TO GENERATE PRODUCTS       │
        └──────────────────┬───────────────────┘
                           │
                           ▼
        ┌──────────────────────────────────────┐   1040
        │ ADD PRODUCTS TO GENERATE SUM           │
        └──────────────────┬───────────────────┘
                           │
                           ▼
                ┌──────────────────────┐   1050
                │   ACCUMULATE SUM     │
                └──────────────────────┘
```

# FIG. 10